Europäisches Patentamt

European Patent Office

Office européen des brevets

(19)

(11) Veröffentlichungsnummer : **0 052 271**
**B1**

(12) # EUROPÄISCHE PATENTSCHRIFT

(45) Veröffentlichungstag der Patentschrift :
02.05.84

(21) Anmeldenummer : 81109060.4

(22) Anmeldetag : 28.10.81

(51) Int. Cl.³ : **C 01 B 7/07, C 07 C 17/34**

(54) Verfahren zur Reinigung von durch thermische 1.2-Dichlor-ethanspaltung gewonnenem Chlorwasserstoff.

(30) Priorität : 18.11.80 DE 3043442

(43) Veröffentlichungstag der Anmeldung :
26.05.82 Patentblatt 82/21

(45) Bekanntmachung des Hinweises auf die Patenterteilung : 02.05.84 Patentblatt 84/18

(84) Benannte Vertragsstaaten :
BE DE FR GB IT NL SE

(56) Entgegenhaltungen :
DE-A- 1 493 213
DE-A- 2 353 437
DE-A- 2 438 153
DE-B- 1 568 679
DE-B- 2 728 783
US-A- 4 206 188
Die Akte enthält technische Angaben, die nach dem
Eingang der Anmeldung eingereicht wurden und die
nicht in dieser Patentschrift enthalten sind.

(73) Patentinhaber : WACKER-CHEMIE GMBH
Prinzregentenstrasse 22
D-8000 München 22 (DE)

(72) Erfinder : Dummer, Gerhard, Dipl.-Ing.
Alzweg 9
D-8261 Burgkirchen/Alz (DE)
Erfinder : Schmidhammer, Ludwig, Dr. Dipl.-Chem.
Pappelweg 5
D-8261 Halming/Markt 1 (DE)
Erfinder : Strasser, Rudolf, Dr. Dipl.-Chem.
Lindacher Strasse 58
D-8263 Burghausen (DE)

## Verfahren zur Reinigung von durch thermische 1,2-Dichlorethanspaltung gewonnenem Chlorwasserstoff

Die Erfindung betrifft ein Verfahren zur Reinigung von Chlorwasserstoff, der bei der thermischen Spaltung von 1,2-Dichlorethan anfällt, durch Hydrieren der Beimengungen an Acetylen mit überschüssigem Wasserstoff bei Drücken von 8 bis 20 bar abs., wobei das Gasgemisch mit Wasserstoff beladen, eine Erwärmungsvorrichtung aufgegeben und anschließend in einen Reaktor überführt wird, der mit einem Trägerkatalysator beladen ist, der Komponenten enthält, ausgewählt aus der Gruppe des metallischen Platins, des Palladiums sowie deren Oxiden.

Beim großtechnischen Verfahren zur Herstellung von Vinylchlorid wird bekanntlich 1,2-Dichlorethan bei erhöhten Temperaturen und Drücken zu Vinylchlorid und Chlorwasserstoff gecrackt. Der gebildete Chlorwasserstoff wird zweckmäßigerweise zur Oxychlorierung von Ethylen zu weiterem 1,2-Dichlorethan eingesetzt.

Bei der 1,2-Dichlorethan-Pyrolyse entsteht jedoch, gewöhnlich in Anteilen von 0,05 bis 0,5 Mol%, Acetylen, das im pyrolytisch gewonnenen Chlorwasserstoff mitgeschleppt wird. Da Acetylen unter Oxychlorierungsbedingungen zu schwer zu entfernenden, überdies die Polymerisation von Vinylchlorid beeinträchtigenden Produkten abreagiert, muß es entfernt werden.

Die anfallenden Acetylenmengen sind jedoch für eine wirtschaftliche Gewinnung bzw. für eine Umwandlung mit folgender Abtrennung zu gering. Es wurde deshalb bereits vorgeschlagen, die Acetylenbeimengungen im Chlorwasserstoff zu hydrieren, da die entsprechenden Umwandlungsprodukte — Ethylen und Ethan — naturgemäß die Oxychlorierung nicht stören.

So lehrt die DE-OS 23 53 437 ein Hydrierverfahren, wobei die Hydrierung bei Raumströmungsgeschwindigkeiten von 7 000 bis 15 000 Raumteilen Gas pro Raumteilkatalysator je Stunde (berechnet bei 15,6 °C und 1 Atmosphäre) in mindestens zwei aufeinanderfolgenden Katalysatorzonen vorgenommen wird. Dabei weist das Katalysatorsystem ein in Richtung des Produktstroms ansteigendes Aktivitätsprofil auf.

Dieses Verfahren ist jedoch nur bei relativ geringen Drücken praktikabel, da der Einsatz zumindest teilweise aktiverer Katalysatoren bei Drücken von 8 bar abs. und mehr bereits nach wenigen Monaten Betriebsdauer zu einer bleibenden Katalysator-Desaktivierung durch Rußabscheidungen infolge von Acetylenzersetzung führt.

Gemäß DE-AS 15 68 679 wird ebenfalls vorgeschlagen, das bei der Oxychlorierung störende Acetylen durch Hydrieren von Platin oder Palladiumkatalysatoren aus dem Chlorwasserstoff zu entfernen. Die Rekationsparameter können in weiten Grenzen variieren : es werden Reaktionstemperaturen von 50 bis 200 °C, Raumströmungsgeschwindigkeiten von 300 bis 5 000 Raumteilen Gas pro Raumteilkatalysator, Wasserstoffzugaben in 2- bis 5-fachem molaren Überschuß, bezogen auf die Acetylenmenge, Drücke bis zu 211 ata, vorzugsweise jedoch 1,4 bis 7 Atmosphären, genannt. Weiter können gemäß obiger Anmeldung Trägerkatalysatoren auf Basis beliebigen bekannten Trägermaterials eingesetzt werden.

Die Praxis hat nun gezeigt, daß, obwohl im Prinzip durchführbar, dieses Hydrierverfahren in wirtschaftlicher Weise nur bei Drücken bis maximal 7 bar abs. über einen längeren Zeitraum betrieben werden kann, ohne daß eine Katalysatorschädigung durch Rußabscheidung eintritt, die zu häufigem Wechsel des teuren Katalysators auf Edelmetallbasis führt, bzw. ohne daß eine Selektivitätseinbuße mit der Folge einer vermehrten Bildung wertlosen Ethans (anstatt des erwünschten Ethylens) eintritt, sowie ferner ohne daß die Bildung unerwünschter Hydrochlorierungsprodukte des Acetylens und des Ethylens hingenommen werden müssen.

Das Verfahren nach der genannten DE-AS 15 68 679 wurde weiterhin gemäß DE-OS 24 38 153 insoweit verbessert, als ein Trägerkatalysator zur Hydrierung des Restacetylens im Chlorwasserstrom eingesetzt wurde mit Platinmetallen als Aktivkomponenten und einem $SiO_2$-haltigen Träger, dessen BET-Oberfläche unter 5 m²/g liegt. Obwohl dieser Katalysator weniger verrußungsanfällig ist, zeigt sich, daß bei Anwendung höherer Chlorwasserstoffeingangsdrücke bereits nach kurzen Standzeiten Selektivitätseinbußen auftreten und die Nebenproduktbildung zunimmt.

Bei großtechnischen Verfahren zur Herstellung von Vinylchlorid ist jedoch oftmals ein Chlorwasserstoff-Eingangsdruck in die Oxychlorierungsstufe von 8 bar abs. und mehr erforderlich (vgl. hierzu DE-OS 14 93 213).

Aufgabe der Erfindung war es, ein Verfahren zu entwickeln, zur Reinigung von Chlorwasserstoff, der bei der 1,2-Dichlorethanpyrolyse anfällt, durch Hydrieren mitgeschleppten Acetylens im Druckbereich von 8 bis 20 bar abs. Der gereinigte Chlorwasserstoff muß dabei Anforderungen erfüllen, die ihn als Einsatzstoff für eine Oxychlorierung verwendbar machen. Insbesondere sollten die beschriebenen Nachteile — Rußabscheidungen am Katalysator, Leistungsabfall des Katalysators sowie Selektivitätseinbußen bzw. Nebenproduktbildung — auch bei Standzeiten des Katalysators von mehreren Jahren unter Anwendung der verfahrensgemäßen relativ hohen Drücke vermieden werden.

Gegenstand der Erfindung ist ein Verfahren zur Reinigung von Chlorwasserstoff, der bei der thermischen Spaltung von 1,2-Dichlorethan anfällt durch Hydrieren der Beimengungen an Acetylen mit überschüssigem Wasserstoff bei Drücken von 8 bis 20 bar abs., das dadurch gekennzeichnet ist, daß

a) sich der numerische Wert des einzusetzenden molaren Überschusses H an Wasserstoff in Abhängigkeit vom Anteil A des Acetylens in Mol% im Chlorwasserstoff mit einer Toleranz von ± 5 % des zu

**0 052 271**

errechnenden Wertes für H nach der Gleichung

$$H = 10 \cdot A + 1$$

ergibt,

b) die Wasserstoffzugabe zum Chlorwasserstoff vor, zumindest ab Erreichen einer Temperatur von 70 °C erfolgt,

c) die Verweildauer t in sec. des Gasstroms ab Erreichen einer Temperatur von ca. 70 °C zum Katalysatorbetteintritt maximal 0,8 beträgt,

d) die Temperatur des Gasgemisches am Reaktoraustritt als Regelgröße für die Erwärmungsvorrichtung dient und zwischen 120 und 180 °C liegt,

e) die Parameter Raumströmungsgeschwindigkeit R, ausgedrückt in Nl Gas pro Liter Katalysatorvolumen je Stunde, Temperatur T in K des Gasgemisches am Reaktoraustritt und Druck p in bar abs. die Bedingung

$$T = \frac{388 - 0,5\ p}{1 - (2,78\ p + 11,3) \cdot 10^{-5} \cdot R/p}$$

mit einer zulässigen Abweichung von ± 2 % für T erfüllen, und

f) als Katalysatorträgermaterial oxidische Spezies des Aluminiums sowie des Siliciums eingesetzt werden, die eine spezifische Oberfläche von maximal 5 m²/g aufweisen.

Es ist bevorzugt, daß die Wasserstoffzugabe zum Chlorwasserstoff vor, zumindest ab Erreichen einer Temperatur von ca. 70 °C erfolgt.

Der aus der thermischen Spaltung von 1,2-Dichlorethan stammende, von Vinylchlorid und nicht umgesetztem 1,2-Dichlorethan bereits befreite, zumeist eine Temperatur von 30 °C aufweisende Chlorwasserstoff wird bei Drücken von 8 bis 20 bar abs. einem Reaktionssystem zugeführt, um ihn von mitgeschleppten Acetylen-Verunreinigungen zu befreien. Der Acetylen-Anteil im Chlorwasserstoff beträgt zwischen 0,05 und 0,5 Mol%.

Das Reaktionssystem besteht aus einer Erwärmungsvorrichtung, einer in örtlicher Nähe dazu angebrachten Wasserstoffzuführung und dem eigentlichen Hydrierreaktor.

Der von Acetylen zu befreiende Chlorwasserstoff wird mit Wasserstoff beaufschlagt, unter Einhaltung kurzer Verweilzeiten in der Erwärmvorrichtung auf die erwünschte Temperatur gebracht sowie dem eigentlichen Hydrierreaktor zugeführt und schließlich als Einsatzstoff für eine Oxichlorierung von Ethylen zu 1,2-Dichlorethan weiterverwendet.

Dabei sind erfindungsgemäß folgende Reaktionsbedingungen einzuhalten :

1. Der Chlorwasserstoff wird so weit erwärmt, daß seine Temperatur am Reaktoraustritt 120 bis 180 °C beträgt. Die Austrittstemperatur des Gemisches dient somit als Regelgröße zur Steuerung der Erwärmungsvorrichtung.

2. Der Chlorwasserstoff wird, bezogen auf dessen Acetylengehalt mit Wasserstoff im Überschuß beaufschlagt. Der numerische Wert des Wasserstoffüberschusses H ergibt sich aus der Gleichung

$$H = 10 \cdot A + 1,$$

wobei A den Anteil des Acetylens im Chlorwasserstoff, ausgedrückt in Mol%, bedeutet. Die zulässige Abweichung beträgt ± 5 % des zu errechnenden Wertes für H.

Die Wasserstoffzugabe erfolgt zweckmäßig über ein perforiertes Mischkreuz in örtlicher Nähe zur Erwärmungsvorrichtung. Es kann reiner Wasserstoff, der gewöhnlich bei Umgebungstemperatur liegt, aber auch mit Inertgasen, wie Methan, Stickstoff, Kohlendioxid und dergleichen, verdünnter Wasserstoff eingesetzt werden.

3. Die Verweildauer des Gasgemisches darf ab Erreichen einer Temperatur von ca. 70 °C bis zum Katalysatorbetteintritt maximal 0,8 Sekunden betragen. Es ist bevorzugt, die Wasserstoffzugabe zum Chlorwasserstoff vor, zumindest jedoch ab Erreichen der obengenannten Temperatur vorzunehmen.

Zur Erzielung der extrem kurzen Verweilzeiten muß die Erwärmungsvorrichtung entsprechend ausgelegt sein. Sofern verfahrens- und apparatebedingt ein entsprechend hoher Druckabfall möglich ist, kann ein einziger Wärmetauscher verwendet werden. Oftmals ist es jedoch zweckmäßig, die Chlorwasserstofferwärmung in zumindest zwei getrennten Wärmetauschern vorzunehmen, wobei zunächst eine Vorwärmzone passiert wird, in welcher der Chlorwasserstoff mit niedriger Heizmitteltemperatur auf höchstens 70 °C vorgewärmt wird und anschließend einem Überhitzer aufgegeben wird, der das Gasgemisch so weit erhitzt, daß es am Reaktoraustritt eine Temperatur von 120 bis 180 °C aufweist.

Die Wasserstoffzugabe erfolgt in dieser Anordnung am besten unmittelbar am Überhitzereintritt.

Weiterhin müssen zwischen Erwärmungsvorrichtung und Hydrierreaktor kurze Weglängen eingehalten werden. Am besten wird, je nach Ausgestaltung des Katalysatorbetts, die Erwärmungsvorrichtung in vertikaler oder horizontaler Anordnung direkt auf den Hydrierreaktor aufgesetzt.

4. Ferner ist es erforderlich, den Durchsatz auf die Temperatur- und Druckverhältnisse sowie das eingesetzte Katalysatorvolumen abzustimmen. Erfindungsgemäß werden die drei Verfahrensparameter

3

Raumströmungsgeschwindigkeit R, Druck p und Temperatur T so angepaßt, daß sie der Gleichung

$$T = \frac{388 - 0,5\,p}{1 - (2,78\,p + 11,3) \cdot 10^{-5} \cdot R/p}$$

genügen. Hierbei bedeutet T die Temperatur des von Acetylen befreiten Chlorwasserstoffs am Reaktoraustritt, gemessen in K, p den Eingangsdruck am Reaktor in bar abs. und die Raumströmungsgeschwindigkeit R die Menge eingesetzten Chlorwasserstoffs in Nl Gas pro Liter Katalysatorvolumen je Stunde. Die obige Gleichung gilt für die anspruchsgemäßen Druck- und Temperaturbereiche. Bei Vorgabe der entsprechenden Daten für den Druck und die Raumströmungsgeschwindigkeit ist eine Abweichung für Temperaturwert von ± 2 % zulässig.

5. Der Hydrierreaktor enthält einen Trägerkatalysator auf Basis oxidischer Spezien des Aluminiums sowie des Siliciums, die eine spezifische Oberfläche von maximal 5 m²/g aufweisen. Beispiele für solche Trägersubstanzen sind Quarzmehl, α-Aluminiumoxid, Kieselerde, Kaolin und andere.

Die aktiven Komponenten des Trägerkatalysators sind ausgewählt aus der Gruppe des metallischen Platins, des Palladiums sowie deren Oxiden. Die Menge an Aktivkomponenten beträgt 0,1 Gew.% bis 0,2 Gew.%, bezogen auf Gesamtkatalysatormenge.

Grundsätzlich kann der Reaktor als Festbett aber auch als Wirbelbett ausgestaltet sein. Bei Anwendung von Wirbelbettverfahren wird der Reaktor von unten nach oben durchströmt, bei Festbettanordnung ist die Strömungsrichtung zweckmäßigerweise van oben nach unten. Entsprechend muß die Erwärmungsvorrichtung am Reaktor angebracht werden.

Nach dem erfindungsgemäßen Verfahren gelingt es, den aus der thermischen Spaltung von 1,2-Dichlorethan stammenden Chlorwasserstoff als Einsatzstoff für eine Oxychlorierung aufzubereiten, wobei selbst unter Anwendung relativ hoher Drücke das zur Hydrierung der Acetylen-Verunreinigungen verwendete Katalysatormaterial über Jahre hinaus einsatzbereit bleibt. Durch die erfindungsgemäße Prozeßsteuerung gelingt es, Kohlenstoffdefizite, ausgedrückt als Differenz der Kohlenwasserstoffmenge vor und nach Reaktor weitgehend zu vermeiden und unerwünschtes Acetylen überwiegend in weiterverwertbares Ethylen umzuwandeln.

Die Erfindung wird nun anhand von Beispielen und Vergleichsbeispielen näher erläutert :

## Beispiel 1

Chlorwasserstoff aus der thermischen Spaltung von 1,2-Dichlorethan mit einem Acetylen-Gehalt von 0,25 Mol% wurde in Mengen von 8 800 Nm³/h unter einem Druck von 9,5 bar abs. (gemessen am Reaktoreintritt) einem Reaktionssytem zugeführt, bestehend aus einem Vorwärmer, einem Überhitzer und dem eigentlichen Hydrierreaktor. Der Chlorwasserstoff passierte zunächst den mit heißem Dampfkondensat betriebenen Vorwärmer, in dem das Gasgemisch eine Temperatur von ca. 70 °C erreichte. Unmittelbar vor Eintritt in den Überhitzer wurde das Gasgemisch über ein perforiertes Mischkreuz mit 77 Nm³/h Wasserstoff beaufschlagt (entsprechend einem 3,5-fachen Wasserstoff-Überschuß, bezogen auf umzusetzendes Acetylen). Im Überhitzer wurde das mit Wasserstoff beladene Gemisch mittels hochgespannten Wasserdampfs so weit erhitzt, daß die Temperatur des Gemisches am Hydrierreaktoraustritt bei 158 °C lag.

Der Überhitzer war in vertikaler Anordnung auf dem Hydrierreaktor angeflanscht, die Verweilzeit zwischen Überhitzereintritt und Reaktoreintritt betrug 0,47 Sekunden.

Der Hydrierreaktor enthielt 3,15 m³ eines 0,15 Gew.% Palladium enthaltenden Trägerkatalysators auf Basis inerten Siliciumdioxids von ca. 3 mm Korngröße, einem Schüttgewicht von 1 600 kg/m³ und einer spezifischen Oberfläche von < 1 m²/g.

Die Raumströmungsgeschwindigkeit betrug unter Betriebsbedingungen 470 m³ Chlorwasserstoff pro m³ Katalysator je Stunde.

Die aus dem Hydrierreaktor austretenden Gase wurden gaschromatographisch analysiert : es wurden weniger als 1 Vol. ppm Acetylen gefunden, das Molverhältnis von Ethylen zu Ethan lag bei 8,5 : 1. Eine Bildung von Methan, Butanen und Butenen, die auf Acetylenzerfall hindeuten würden, wurde nicht beobachtet. Das Kohlenstoffdefizit, ausgedrückt als Differenz der Summe an Kohlenwasserstoffen im Chlorwasserstoff vor und hinter dem Hydrierreaktor lag bei Werten von < 2 %.

Selbst im Zeitraum von 1,5 Jahren war weder eine Katalysatorverrußung noch sonst eine Katalysatorschädigung unter Leistungsabfall bzw. Selektivitätseinbuße feststellbar.

## Vergleichsbeispiel 1

Die Abänderungen gegenüber Beispiel 1 betreffen im wesentlichen die Einspeisung von Wasserstoff in das System und die Verweilzeiten des Gemisches zwischen Erwärmungsvorrichtung und Hydrierreaktor.

8 000 Nm³/h Chlorwasserstoff mit einem Verunreinigungsgrad von 0,25 Mol% an Acetylen wurden bei 9 bar abs. einem Überhitzer aufgegeben, der das Gasgemisch so weit erhitzte, daß die Temperatur am Reaktoraustritt 180 °C betrug. Es wurde der gleiche Hydrierreaktor, wie in Beispiel 1 beschrieben, verwendet. Der Überhitzer war jedoch nicht am Reaktor angeflanscht, sondern etwa 10 m vor dem Reaktor angeordnet. Die Verweilzeit im Überhitzer betrug 0,32 Sekunden, zwischen Überhitzer und Eintritt in das Katalysatorbett 1,28, entsprechend einer Gesamtverweilzeit von 1,6 Sekunden. Die Raumströmungsgeschwindigkeit, gerechnet bei Betriebsbedingungen, betrug etwa 467 $m^3$ Gas pro $m^3$ Katalysator je Stunde. Die Wasserstoffzugabe erfolgte etwa 2 m vor Reaktoreintritt in 3,5 molarem Wasserstoffüberschuß, bezogen auf Acetylen.

Das aus dem Reaktor austretende Gas enthielt weniger als 1 Volumen-ppm Acetylen und das Molverhältnis von Ethylen zu Ethan betrug 8,5 : 1. Gleichzeitig wurde jedoch die Bildung von etwa 5 Volumen-ppm Methan und 50 Volumen-ppm Butanen und Butenen, die auf Acetylenzerfall hindeuten, beobachtet. Außerdem lag das Kohlenstoffdefizit (Vergleich vor und nach Hydrierreaktor) bei Werten um 15 %. Im Laufe von 3 Monaten mußte der molare Wasserstoffüberschuß auf Werte von 5 bis 6 angehoben werden, um den Restacetylen-Gehalt nach Reaktor bei Werten von weniger als 1 Volumen-ppm halten zu können. Im Laufe von weiteren 3 Monaten konnte selbst bei Erhöhung des molaren Wasserstoffüberschusses auf Werte von 10 ein Restacetylen-Gehalt von 50 Volumen-ppm nicht mehr unterschritten werden. Trotz weiterer Erhöhung des molaren Wasserstoffüberschusses auf Werte von 13 bis 14 (höhere Überschüsse verbieten sich bei der nachfolgenden Oxychlorierung aus Sicherheitsgründen) steigt der Restacetylen-Gehalt nach insgesamt 1,5 Jahren Standzeit des Katalysators bis auf 100 Volumen-ppm an.

Ferner war mit zunehmender Erhöhung des molaren Wasserstoffüberschusses eine entsprechend voranschreitende Selektivitätseinbuße festzustellen. So betrug das Molverhältnis von Ethylen zu Ethan nach 1,5 Jahren Standzeit des Katalysatorsystems nur noch 4 : 1. Da der Katalysator sowohl in seiner Leistung als auch in seiner Selektivität allmählich erschöpft war und das Verfahren somit unwirtschaftlich wurde, mußte der Katalysator ausgewechselt werden. Eine Untersuchung des verbrauchten Katalysators ergab eine starke Verrußung der katalytisch wirksamen Oberfläche.

## Beispiel 2

11,5 $Nm^3/h$ Chlorwasserstoff mit einem Acetylengehalt von 0,2 Mol% wurden einem Hydrierreaktor aufgegeben, der mit 3,2 l Hydrierkatalysator, entsprechend Beispiel 1, gefüllt war. Die Vorwärmung des Chlorwasserstoffs erfolgte in einem Wärmetauscher, der unmittelbar vor dem Reaktor in horizontaler Anordnung angebracht war. Der Chlorwasserstoff wurde so weit erhitzt, daß die Temperatur am Reaktoraustritt 167 °C betrug. Der Eingangsdruck lag bei 12,5 bar abs. Die Verweilzeit zwischen Überhitzereintritt und Eintritt in das Katalysatorbett betrug 0,5 Sekunden, die Raumströmungsgeschwindigkeit 3 800 l Gas pro l Katalysator je Stunde (berechnet bei 15,6 °C und l Atmosphäre). Der Wasserstoff wurde unmittelbar vor Eintritt in den Überhitzer in einer Menge von 3 Mol pro Mol anwesenden Acetylens zugegeben.

Im austretenden Gas war kein Acetylen nachzuweisen und das Molverhältnis von Ethylen zu Ethan betrug 8 : 1. Die Bildung von Methan, Butanen und Butenen, die auf einen Acetylenzerfall hinweisen würden, wurde nicht beobachtet.

## Vergleichsbeispiel 2

Es wurde analog Beispiel 2 gearbeitet. Der Wasserstoff wurd jedoch erst hinter dem Überhitzer, jedoch vor dem Reaktoreintritt, zugegeben.

Das austretende Gas enthielt kein Acetylen und das Molverhältnis von Ethylen zu Ethan betrug 8 : 1. Es wurde jedoch die Bildung von 2 Volumen-ppm Methan und 5 Volumen-ppm Butanen und Butenen beobachtet, die auf eine Acetylenzersetzung bzw. Dimerisierung oder Hydropolymerisation hinweisen.

## Beispiel 3

4 $Nm^3/h$ Chlorwasserstoff mit einem Gehalt von 0,15 Mol% Acetylen wurden einem Hydrierreaktor aufgegeben, der mit 3,2 l Hydrierkatalysator gefüllt war. Es wurde ein Trägerkatalysator auf Basis von $\alpha$-Aluminiumoxid mit einer spezifischen Oberfläche von 1 $m^2/g$ und 0,15 Gew.% Palladium als aktiver Komponente eingesetzt.

Die Vorwärmtemperatur des Chlorwasserstoffs wurde so eingestellt, daß die Temperatur am Reaktoraustritt 131 °C betrug, der molare Wasserstoffüberschuß, bezogen auf Acetylen, lag bei 2,5, die Raumströmungsgeschwindigkeit war auf 1 321 l Gas pro l Katalysator je Stunde (berechnet bei 15,6 °C und 1 Atmosphäre) eingestellt. Der Wasserstoff wurde jeweils unmittelbar vor Eintritt in den Überhitzer zugegeben, der auf den Reaktor direkt aufgesetzt war. Der Reaktoreingangsdruck betrug 9 bar abs.

Das den Reaktor verlassende Gasgemisch wurde auf seinen Gehalt an Vinylchlorid und Ethylchlorid untersucht.

Es wurden 90 Gew.-ppm Vinylchlorid und 3 ppm Ethylchlorid ermittelt.

## Vergleichsbeispiel 3

Es wurde die Arbeitsweise, wie im Beispiel 3 beschrieben, wiederholt, mit der Abänderung, daß ein

5

Trägerkatalysator auf Basis eines Aluminiumoxids eingesetzt wurde, das eine spezifische Oberfläche von 30 m$^2$/g aufwies.

Es wurden 150 Gew.-ppm Vinylchlorid und 100 Gew.-ppm Ethylchlorid ermittelt.

Der Vergleich der Daten gemäß Beispiel 3 und Vergleichsbeispiel 3 zeigt die Abhängigkeit der Nebenproduktbildung (Hydrochlorierungsprodukte) von der spezifischen Oberfläche des Katalysatormaterials bei erhöhten Drücken.

## Vergleichsbeispiel 4

Es wurde die Arbeitsweise von Vergleichsbeispiel 3 wiederholt, mit der Abänderung, daß der Eingangsdruck 3,5 bar abs. betrug.

Es wurden 80 ppm Vinylchlorid und 2 ppm Ethylchlorid ermittelt. Bei Vergleich der Daten gemäß Vergleichsbeispiel 3 und Vergleichsbeispiel 4 ergibt sich, daß die Problematik der Bildung von Hydrochlorierungsprodukten erst bei relativ hohen Drücken auftritt.

## Beispiel 4

8,8 Nm$^3$/h Chlorwasserstoff mit einer Acetylenausgangskonzentration von 0,05 Mol% wurden einem Hydrierreaktor aufgegeben, der mit 3,2 l Hydrierkatalysator (0,1 Gew.% Platin auf α-Aluminiumoxid von 3,2 mm Korngröße und einer spezifischen Oberfläche von weniger als 1 m$^2$/g) gefüllt war. Der Überhitzer wurde so einreguliert, daß die Temperatur am Reaktoraustritt bei 158 °C lag. Der Reaktoreingangsdruck lag bei 9 bar abs. und der numerische Wert des angewandten Wasserstoffüberschusses betrug 1,5.

Es wurde ein molares Verhältnis von Ethylen zu Ethan nach Reaktor von 8 : 1 ermittelt.

## Beispiel 5

Die Arbeitsweise gemäß Beispiel 4 wurde wiederholt, mit den Abänderungen, daß der Acetylengehalt 0,20 Mol% und der numerische Wert des angewandten Wasserstoffüberschusses 2,9 betrug.

Das molare Verhältnis von Ethylen zu Ethan nach Reaktor ergab sich zu 9 : 1.

## Vergleichsbeispiel 5

Die Arbeitsweise gemäß Beispiel 4 wurde wiederholt, mit der Abänderung, daß der numerische Wert des angewandten molaren Überschuesses an Wasserstoff 3,5 betrug.

Das ermittelte molare Verhältnis von Ethylen zu Ethan lag bei 5 : 1.

## Vergleichsbeispiel 6

Die Arbeitsweise gemäß Vergleichsbeispiel 5 wurde wiederholt, mit der Abänderung, daß der Eingangsdruck 3,5 bar abs. betrug.

Es wurde ein Verhältnis von Ethylen zu Ethan von 9 : 1 ermittelt.

## Vergleichsbeispiel 7

Es wurde die Arbeitsweise gemäß Beispiel 5 wiederholt, mit der Abänderung, daß der numerische Wert für den angewandten molaren Wasserstoffüberschuß 3,5 betrug.

Das ermittelte Verhältnis von Ethylen zu Ethan lag bei 5 : 1.

Der Vergleich der Ergebnisse gemäß den Beispielen 4 und 5 und den Vergleichsbeispielen 5, 6 und 7 zeigt, daß die Anwendung eines Wasserstoffüberschusses außerhalb des erfindungsgemäßen Bereichs zu Selektivitätseinbußen führt, daß diese Problematik jedoch erst bei relativ hohen Drücken auftritt.

**Anspruch**

1. Verfahren zur Reinigung von Chlorwasserstoff, der bei der thermischen Spaltung von 1,2-Dichlorethan anfällt, durch Hydrieren der Beimengungen an Acetylen mit überschüssigem Wasserstoff bei Drücken von 8 bis 20 bar abs., wobei das Gasgemisch mit Wasserstoff beladen, einer Erwärmungsvorrichtung aufgegeben und anschließend in einen Reaktor überführt wird, der mit einem Trägerkatalysator beladen ist, der Komponenten enthält, ausgewählt aus der Gruppe des metallischen Platins, des Palladiums sowie deren Oxiden, dadurch gekennzeichnet, daß

a) sich der numerische Wert des einzusetzenden molekularen Überschusses H an Wasserstoff in Abhängigkeit vom Anteil A des Acetylens in Mol % im Chlorwasserstoff mit einer Toleranz von ± 5 % des zu errechnenden Wertes für H nach der Gleichung

$$H = 10 \cdot A + 1$$

ergibt,

b) die Wasserstoffzugabe zum Chlorwasserstoff vor, zumindest ab Erreichen einer Temperatur von 70 °C erfolgt,

c) die Verweildauer t in sec. des Gasstroms ab Erreichen einer Temperatur von ca. 70 °C bis zum Katalysatorbetteintritt maximal 0,8 beträgt,

d) die Temperatur des Gasgemisches am Reaktoraustrit als Regelgröße fur die Erwärmungsvorrichtung dient und zwischen 120 und 180 °C liegt,

e) die Parameter Raumströmungsgeschwindigkeit R, ausgedrückt in Nl Gas pro Liter Katalysatorvolumen je Stunde, Temperatur T in K des Gasgemisches am Reaktoraustritt und Druck p in bar abs. die Bedingung

$$T = \frac{388 - 0{,}5\,p}{1 - (2{,}78\,p + 11{,}3) \cdot 10^{-5} \cdot R/p}$$

mit einer zulässigen Abweichung von ± 2 % für T erfüllen, und

f) als Katalysatorträgermaterial oxidische Spezien des Aluminiums sowie des Siliciums eingesetzt werden, die eine spezifische Oberfläche von maximal 5 m²/g aufweisen.

**Claim**

1. Process for the purification of hydrogen chloride formed during the thermal splitting of 1,2-dichloroethane, by hydrogenating the acetylene admixed with the hydrogen chloride as an impurity with excess hydrogen, at pressures of from 8 to 20 bar absolute, the gas mixture being charged with hydrogen, conveyed to a heating device, and then transferred to a reactor charged with a supported catalyst containing a substance selected from the group consisting of metallic platinum, palladium, and the oxides thereof, characterized in that

a) the molar excess H of hydrogen used is a function of the content A of acetylene (in mole %) in the hydrogen chloride and is calculated (with a tolerance of ± 5 % for the value of H) according to the equation

$$H = 10 \cdot A + 1$$

b) the hydrogen is added to the hydrogen chloride before, or at least as soon as, a temperature of approximately 70 °C is reached ;

c) the dwell time t of the gas stream between reaching a temperature of approximately 70 °C and entering the catalyst bed is not more than 0.8 second ;

d) the temperature of the gas mixture leaving the reactor is used as a regulating variable for the heating device and is maintained between 120 and 180 °C ;

e) the following parameters, viz. volume flow rate R (expressed in litres of gas (measured at standard temperature and pressure) per litre of catalyst per hour), temperature T (in K) of the gas mixture leaving the reactor, and pressure p (in bar absolute), fulfil the condition

$$T = \frac{388 - 0.5\,p}{1 - (2.78\,p + 11.3) \cdot 10^{-5} \cdot R/p}$$

with a tolerance of ± 2 % for T ; and

f) oxidic types of aluminium and silicon that have a specific surface area of not more than 5 m²/g are used as the catalyst support material.

**Revendication**

1. Procédé de purification de chlorure d'hydrogène provenant de la dissociation thermique du 1,2 dichloréthane, par hydrogénation de l'acétylène qu'il contient avec un excès d'hydrogène sous des pressions absolues de 8 à 20 bars, le mélange gazeux étant mélangé à de l'hydrogène, envoyé à un dispositif de chauffage puis à un réacteur d'hydrogénation garni d'un catalyseur sur support dont les éléments catalytiques sont choisis parmi le platine et le palladium métalliques et leurs oxydes, procédé caractérisé en ce que :

a) la valeur numérique de l'excès molaire d'hydrogène à employer, H, est donnée en fonction de la proportion A d'acétylène en moles % dans le chlorure d'hydrogène, avec une tolérance de ± 5 % de la valeur à calculer pour H par la relation

$$H = 10 \cdot A + 1$$

**0 052 271**

b) l'addition d'hydrogène au chlorure d'hydrogène se fait avant que soit atteinte la température de 70 °C, ou au moins dès que cette température est atteinte,

c) la durée de séjour t en secondes du courant gazeux, entre le moment où est atteinte une température d'environ 70 °C et l'arrivée à la couche catalytique, est d'au maximum 0,8,

d) la température du mélange gazeux à la sortie du réacteur sert de grandeur de régulation du dispositif de chauffage et elle est comprise entre 120 et 180 °C,

e) le débit de circulation R, en litres normaux (IN) de gaz par litre de catalyseur et par heure, la température T en degrés K du mélange gazeux à la sortie du réacteur, et la pression absolue p en bar, satisfont à la condition

$$T = \frac{388 - 0,5\,p}{1 - (2,78\,p + 11,3) \cdot 10^{-5} \cdot R/p}$$

avec une tolérance de ± 2 % pour la température T, et

f) on utilise comme support catalytique des formes oxydées de l'aluminium et du silicium ayant une surface spécifique maximale de 5 m²/g.